Europäisches Patentamt

European Patent Office

Office européen des brevets

(11) Publication number: **0 434 222 A1**

# EUROPEAN PATENT APPLICATION

(21) Application number: 90312689.4

(22) Date of filing: 21.11.90

(51) Int. Cl.5: **C01B 9/08**, C01G 25/04, C01G 27/04, C01F 7/50

(30) Priority: 22.11.89 US 440359

(43) Date of publication of application:
26.06.91 Bulletin 91/26

(84) Designated Contracting States:
CH DE FR GB IT LI SE

(71) Applicant: TELEDYNE INDUSTRIES INC
1600 N.W. Old Salem Road
Albany, Oregon 97321(US)

(72) Inventor: Sommers, James A.
705 Fawnridge Drive N.W.
Albany, Oregon(US)
Inventor: Ginther, Robert
3107 Myrtle Avenue
Temple Hills, Maryland(US)
Inventor: Ewing, Kenneth
13011 Victoria Heights Drive
Bowie, Maryland(US)

(74) Representative: Watts, Peter Graham et al
Anthony Cundy & Co. 384 Station Road
Dorridge
Solihull West Midlands B93 8ES(GB)

(54) Ultra high purity metal fluorides and their preparation.

(57) A process for producing an ultra pure fluoride product salt of a metal selected from Zr, Hf, Ba, La, Al and Na, including recrystallizing from aqueous media a soluble precursor salt material containing one or more of Fe, Ni, Cu, Co, Ce, Nd or Sm impurities, the precursor salt material being selected from the chlorides, bromides, iodides, oxychlorides, oxybromides, oxyiodides, nitrates and oxynitrates of the metals, the recrystallization including the steps of essentially completely solubilizing the precursor salt material and any of the impurities present through adjustment of temperature and/or acidity of the aqueous media, and thereafter completely insolubilizing essentially only the precursor salt through readjustment of the temperature and/or acidity to leave the impurities in the media, and separating the purified precursor salt from the media, fluorinating the purified precursor salt with a fluorinating agent at a temperature of from about 0 to about 100 degrees C, to yield a substantially insoluble purified fluoride product salt in contact with a liquor containing the combined impurity content of the purified precursor salt and the fluorinating agent, and isolating the purified fluoride product salt from the liquor.

EP 0 434 222 A1

# ULTRA HIGH PURITY METAL FLUORIDES AND THEIR PREPARATION

## Background of the Invention

This invention concerns the synthesis of extremely pure salt materials for use in glass products such as optical fibers, solid state lasers, and dielectric materials, wherein contaminants measured in just a few parts or less, per billion of the desired salt are often intolerable. In particular the invention concerns the preparation of metal fluorides from salt materials including the chlorides, bromides, iodides, oxychlorides, oxybromides, oxyiodides, nitrates and oxynitrates of Zr, Hf, Ba, La, Na and Al, hereinafter termed "precursor salts", which can be reacted with fluorinating agents to give the ultra pure fluorides, hereinafter termed "product salts", in commercially desired quantities necessary for the preparation of high quality fluoride glasses, such as "ZBLAN", having extremely low levels of cationic and oxide impurities, and useful for example, in low-loss IR transmission applications. The fluorides of particular interest in the present invention are $ZrF_4$, $HfF_4$, $BaF_2$, $LaF_3$, $AlF_3$ and NaF.

The metal fluorides for IR glass preparation must have very low levels of impurity, with respect, for example, the transition elements, rare earths, and hydroxide ion in order to minimize absorption in the 2 to 4 micron range of the IR region of the spectrum. Heavy metal glasses of the ZBLAN (Zr-Ba-La-Al-Na) type require fluorides of very high purity for realization of losses near the theoretical limit of 0.01 dB/km. Cationic impurity contributions to loss have been estimated by France, et al. [Proc. SPIE (Infrared Optical Materials and Fibers IV), Vol. 618, 51-57, 1986] and such estimates indicate that important impurities must be lowered to sub-part per billion levels. Of particulars interest are transition metal (TE) and rare earth metal (RE) cations which absorb near 2.5 microns; for the TEs, these are Fe, Co, Cu and Ni, and for the REs, Nd, Ce and Sm. These should be present only at very low levels in any of the fluorides used to make glass.

Furthermore, particulate materials such as metal oxides, carbides, carbon, coke, phosphides, and the like, must be essentially absent since they serve as scattering centers for the electromagnetic radiation and thus produce undesirable attenuation. Such impurities might seam to the inherently absent in purified fluoride compounds which typically are used in glass manufacture, however, in the sensitive quantities thereof with which the present invention is concerned, these impurities can easily be introduced by the use of particular materials present in chemical process equipment and even from available purified reagents and metals. In this regard, there is a wide variety of cationic materials and metal complexes and compounds present in the less than trace amounts involved herein, which must be rendered involitile or removed to produce the desired ultra pure product salt, described herein. Some of the problems presented by the presence of such materials have been investigated and reported, for example, in the "Proceedings for the 4th International Symposium on Halide Glasses", 1987.

The rigorous purity required for such glasses have previously often been beyond the capability of the available technology, being, e.g., at about the level of just a few parts of impurity per billion (ppb) or less in the desired salt. Commercially available fluorides, even those sold as very high purity, have such impurities at the 10 to 1000 parts per billion (ppm) level. Thus, there is a recognized need for a greater improvement in purity than presently available, such as, e.g., a one thousand to one million-fold betterment.

The presently known purification techniques for the production of zirconium and hafnium fluorides include recrystallization, solvent extraction, and the anhydrous methods of electromotive series displacement (ESD)-augmented distillation of $ZrF_4$ (the subject of U.S. Patent 4,578,252),and chemical vapor purification (CVP) of zirconium metal (the subject of U.S. Patent 4,652,438).

The recrystallization and solvent extraction methods accomplish purification at the $ZrOCl_2$ stage, but there is substantial impurity pickup, e.g., 2 to 10-fold, in the succeeding steps to obtain $ZrF_4$. Furthermore, these methods tend, undesirably, to leave oxide and hydroxide impurities in the $ZrF_4$. The anhydrous methods, wherein purification capability is based essentially on the high reducing power of solid reducing agents or electrodes which reduce, e.g., metal chlorides, and effect a lowering of impurity volatilities, are restricted in practical application by the limitations of mass transport in the proposed schemes.

In the known distillation purification of $ZrF_4$ from $BaF_2$-$ZrF_4$ solutions, there is a similar shortfall of purification. The distillation without ESD yields a product with unacceptable iron impurity levels, while the ESD-augmented option which gives further improvement, also falls far short of theoretical thermodynamic limits. Also, repeated distillation does not appear to yield further improvement. These data indicate a failure, due to limitations of mass transport, to achieve or approach the desired purity level of about 10 to about 100 ppb.

Among aqueous methods, liquid-liquid extraction (as practiced, for example, by Kobayashi, Proceedings of the Fifth International Symposium on Halide Glasses, Extended Abstracts, by Klein, et al., Proc. SPIE, Vol. 484, p. 90-92, 1984) have been shown to be effective means for eliminating TE impurities from soluble fluoride precursors. However, large differences in efficiency of removal are found for different impurities, often requiring that a procedure be extended or repeated until the most difficult to remove impurity is lowered to the desired level. Thus, there is a need for a method which removes all impurities with equal efficiency. Another disadvantage is that both these methods require contact with organic phases, which can leave residues in the purified product that are detrimental to the formation of good glass. A further disadvantage is that such a sequence of synthetic steps is lengthy and requires several other chemicals which enhances the risk of re-introducing contaminants. Also with such methods, after the purification, the purified material must be converted to a fluoride and in so doing, the inevitable impurity content of the fluorinating agent cannot be rejected. Another problem accrues to those aqueous routes wherein the purified precursor is collected as an oxide for fluorination, for example, by precipitation with ammonium hydroxide followed by filtration, drying and calcining. The calcining step often leaves an unreactive oxide, which can only be fluorinated with difficulty, requiring extended reaction time, temperature and excess of fluorinating agent. Still another consideration is that all of the reported work on such aqueous methods has used reagents, particularly hydrofluoric acid of ultrapure grades, which are extremely expensive and available only in small quantities.

Objectives, therefore, of the present invention are to provide an aqueous method for the preparation of selected metal fluoride product salts and their precursor salts, of heretofore unattainable purity, wherein the method has highly acceptable, i.e., minimal requirements of initial reactant purity, energy input, chemical ingredient expense, and apparatus complexity. Further, it is an objective to provide an economical and relatively non-complex process, which, in operation, is relatively easy to control, i.e., temperature and reaction rates, and which is readily adaptable to batch, semi-continous or continuous operation, and which can efficiently and effectively produce in a given time, relatively large quantities of precursor salt and its fluoride product salt, e.g., several times the quantities heretofore possible by means of most of the aforementioned known processes.

Summary of the Invention

These and other objects hereinafter appearing have been attained in accordance with the present invention which is defined in its broad sense as a process for producing an ultra pure fluoride product salt of a metal selected from Zr, Hf, Ba, La, Al and Na comprising recrystallizing from aqueous media a soluble precursor salt material containing one or more of Fe, Ni, Cu, Co, Ce, Nd or Sm impurities, said precursor salt material being selected from the chlorides, bromides, iodides, oxychlorides, oxybromides, oxyiodides, nitrates and oxynitrates of said metals, the recrystallization comprising the steps of essentially completely solubilizing said precursor salt material and any of said impurities present through adjustment of temperature and/or acidity of said aqueous media, and thereafter completely insolubilizing essentially only the precursor salt through readjustment of said temperature and/or acidity to leave said impurities in said media, and separating the purified precursor salt from said media, fluorinating the purified precursor salt with a fluorinating agent at a temperature of from about 0 to about 100 degrees C, to yield a substantially insoluble purified fluoride product salt in contact with a liquor containing the combined impurity content of the purified precursor salt and the fluorinating agent, and isolating the purified fluoride product salt from the liquor.

In certain preferred embodiments:
the metals are selected from Zr, Hf, and Al, the soluble precursor salt material is a chloride, oxychloride, nitrate or oxynitrate, and the fluorinating agent is aqueous hydrofluoric acid or vapors derived therefrom;
the metals are Zr and Hf, the purified precursor salt is the oxychloride, and the fluorinating agent is aqueous hydrofluoric acid or vapors derived therefrom;
the recrystallization comprises dissolving at above about 75 degrees C, a halide precursor salt material in aqueous hydrochloric acid media of a normality of from about 2 to about 12, cooling said media to below about 40 degrees C to form an oxyhalide precursor salt precipitate, filtering said precipitate from said media, and repeating with said oxyhalide precursor salt said steps of dissolving, filtration and precipitation at least one time prior to fluorination thereof;
the halide precursor salt material is $ZrCl_4$ or $HfCl_4$ and the oxyhalide precursor salt formed in the recrystallization is $ZrOCl_2$ or $HfOCl_2$, in hydrated form;
each precipitate is washed at a temperature of below about 30 degrees C with hydrochloric acid at least once prior to further treatment;
the fluorination is carried out by contacting the recrystallized precursor salt crystals with HF vapors from aqueous hydrofluoric acid, or with HF gas;

3

the recrystallized precursor salt crystals are $ZrOCl_2$, in hydrated from, and wherein an aqueous by-product liquor is formed into which any impurities remaining in the precursor salt or imported with the HF are rejected to effect thereby further purification of the desired fluorination product salt;

the process wherein prior to fluorinating the purified precursor salt to obtain the fluoride product salt, the precursor salt is contacted with from about 5 to about 15% of the stoichiometrically determined amount of fluoride ion to precipitate out and sacrifice a small portion of product salt along with substantially all remaining transition and rare earth element impurities; and

the process wherein the level of Fe in the initial precursor salt material is above about 100 ppb, and in said product salt at below about 30 ppb.

Detailed Description of the Invention

In accordance with the present invention purification of the cationic moiety of the ZBLAN glass ingredients starting with impure soluble precursor salts by means of recrystallization thereof is central. Suitable conditions, usually of temperature and aqueous solution pH, are used to collect a purified precursor solid, leaving the impurities in the mother liquor which is removed by filtration and washing. As described hereinbefore, suitable soluble precursors are halide and nitrate salts and oxysalts of ZBLAN cations. Examples of these are chlorides, bromides and iodides, oxychlorides, oxybromides and oxyiodides, where these exist, and nitrates and oxynitrates where these exist. Each of these has characteristic solubility behavior, whose variation with temperature and pH is much more pronounced than the high and constant solubility of the corresponding TE and RE impurity materials.

Co-equal in importance with the purifiability by recrystallization of the precursor salts for use in the present invention is that such salts be rapidly fluorinated by convenient fluorinating agents such as hydrogen fluoride and its aqueous solutions. This condition is readily fulfilled by the above-mentioned soluble halides, nitrates, and oxysalts, whose conversion to much less-soluble fluorides by aqueous hydrofluoric acid is highly favorable. Furthermore, any impurities imported with the fluorinating agent are sufficiently soluble to remain in the liquor, which is removed by filtration and washing. The product of the fluorination step may, after suitable drying, be directly used in melting to glass if it is recovered in anhydrous form. If it is hydrated, as for example $ZrF_2.H_2O$, it may be dehydrated then melted to glass, or a proper amount of ammonium bifluoride may be added to the glass batch to allow for the water of hydration to be safely driven off in accordance with procedures well-known in glass melting.

In a preferred embodiment of the invention yielding zirconium tetrafluoride monohydrate, $ZrF_4.H_2O$, one may start with zirconium tetrachloride, zirconium oxychloride, or zirconium oxynitrate, which may be in a state of low purity e.g., Fe of 7100 ppb, and typically several hundred ppb of other impurities. Zirconium oxychloride, $ZrOCl_2.8H_2O$, is readily water-soluble at room temperature, and normally substantially insoluble in hydrochloric acid, but quite soluble in the latter medium at elevated temperatures. Under all such conditions, the TE and RE cations are soluble. Therefore, dissolving $ZrOCl_2.8H_2O$ in water at room temperature, heating the solution to an elevated temperature and adding hydrochloric acid produces a clear solution. Upon cooling, $ZrOCl_2.8H_2O$ crystals grow from the solution and may be filtered from the impurity-laden liquor. Purification by means of recrystallization is a well-known technique, but it is the unexpected discovery, outlined in the examples hereinafter, that it is possible to produce zirconium oxychloride of extremely high purity in the process described, and that all the ZBLAN-relevant cations are removed with near equal efficacy. Mitachi, et al. (J. Lightwave Technology, Vol. LT-2, p. 587, 1984) employed recrystallization of $ZrOCl_2$ and $(NH_4)_3ZrF_7$ as intermediate steps in different synthesis methods in which the ammonium fluorozirconate was thermally decomposed to give $ZrF_4$. However, the authors concluded from their experiments that recrystallization has poor potential, being capable of producing product only at the level of one part per million iron. They state that recrystallization is only useful for pre-purification. This is quite different from the findings of our experimental examples.

The recrystallization of zirconium oxychloride may be carried out under a wide range of conditions of acidity, but going substantially below 4N or above 11N causes unnecessary yield losses, in accordance with the data of von Hevesy (Det. Kg. Danske Videnska b. Selskab VI, 7(1925)).

The fluorination of soluble zirconium species by aqueous hydrofluoric acid occurs readily, as demonstrated by Carlson, et al. (J. Electrochem. Soc., Vol. 104, p. 51, 1957) for zirconium oxychloride, and by Craigen, et al. (U.S. Patent 3,702,883), for solution of zirconium oxynitrate. These references do not teach or make obvious the fact that the method employed herein is capable of producing zirconium tetrafluoride monohydrate of very high purity, as will be shown in the examples hereinafter. Both of these authors chose to add strong hydrofluoric acid solution to zirconium species, in the former case by adding it to a solution of zirconium oxynitrate in nitric acid. However, a variety of methods for contacting the precursor with a fluorinating agent may be used. For example, crystals of $ZrOCl_2.8H_2O$ may be placed in an open vessel inside a container which also encloses hydrofluoric acid. Fluorination will then occur by diffusion of HF vapor into the oxychloride crystalline mass. Also, gaseous hydrogen fluoride, substantially anhydrous, may be led over a mass of solid oxychloride crystals in a suitable configuration, wherein the waters of crystallization form the acidic liquor phase into which any impurities remaining in the precursor or imported with the HF are rejected. Thus, in contrast to other means for converting purified ZBLAN cation values into fluorides, the fluorination step of the present invention is a purification. Furthermore, since fluorination occurs to a species which has some aqueous solubility, thorough contact with the fluorinating agent, and hence complete conversion, is assured.

The fluorination with aqueous hydrofluoric acid may be carried out under a variety of conditions, but excessively weak acid or deficient amounts of fluoride will cause substantial amounts of undesirable phases with deficient fluoride and hence excess oxygen or hydroxide as shown by the work of Waters (J. Inorg. Nucl. Chem., 15, 320, 1960) which is detrimental to good glass formation. Once the fluorinated product is collected, it may be dried, e.g., at 110 degrees C, and if hydrates are the product, as for Zr, Hf and Al, they may be melted with ammonium bifluoride to make ZBLAN glass. Alternatively, they may be dehydrated by heating in an atmosphere of flowing HF, which allows the water to be removed from the hydrated fluoride, without hydrolysis, to give an anhydrous fluoride ready for direct use in glass.

The following examples illustrate the present invention. For the work described, only readily available, analytical-reagent grades of hydrochloric and hydrofluoric acids were used.

Example 1. 1100 G. of anhydrous $ZrCl_4$ were dissolved in a boiling or near boiling mixture of 217 g of conc. HCl and 2370 ml of $H_2O$. After cooling to room temperature, vacuum filtration and washing two times with 670 ml aliquots of 7N HCl, 1650 g of $ZrOCl.8H_2O$, designated as Product A, were recovered. This was dissolved in 1700 ml $H_2O$ and the mixture heated to 83 degrees C on a hotplate, whereupon 150 ml conc. HCl was slowly added. The clear, hot solution was set aside to cool overnight, then filtered and washed as above; 1400 g of $ZrOCl_2.8H_2O$ was recovered, dissolved in 1350 ml $H_2O$ and heated as before. When the temperature reached 81 degrees C, 1228 ml of concentrated HCl was added. The mixture was cooled, filtered and washed as before and 1260 g of $ZrOCl_2.8H_{20}$ crystals, designated Product B, were recovered. Product B was placed in a polypropylene beaker and 504 ml of 48% hydrofluoric acid was added over a period of one hour and twenty-five minutes. The following observations were made. After about 20% of the hydrofluoric acid was added, the mixture partially liquified and slumped, allowing the stirrer to turn easily. The temperature rose to 44 degrees C by the end of the addition. Upon standing, a clear liquor was left standing over a dense deposit of fine crystals. These were filtered and washed two times with 250 ml aliquots of 7N HCl. The filter cake weighing 516 g was dried overnight at 110 degrees C and 443 g of product was obtained. This was identified as $ZrF_4.H_2O$ by x-ray diffraction, and designated Product C.

Products A, B, and C were analyzed by graphite furnace atomic absorption spectrometry for the presence of TE impurities and by inductively coupled mass spectrometry for RE impurities. The results found, in weight parts per billion, were:

| Impurity | Product | | |
|---|---|---|---|
| | A | B | C |
| Fe | 340 | <50 | <50 |
| Ni | <20 | <20 | <20 |
| Cu | <10 | <10 | <10 |
| Co | <20 | <10 | <10 |
| Ce | <10 | <10 | <10 |
| Nd | <10 | <10 | <10 |

Example 2. 1100 G. of $HfCl_4$ were added to a mixture of 158 ml of conc. HCl and 1730 ml of $H_2O$. After cooling overnight, the mixture was filtered and washed with 300 ml 7N HCl, then with 450 ml of 7N HCl and filtered. 1300 G. of $HfOCl_2.8H_2O$ were recovered then dissolved in 1200 ml $H_2O$ and the solution pumped through a 0.2 micron filter. The filtrate solution was heated to 82 degrees C and 1460 ml of conc. HCl was slowly added. The solution was set aside to cool overnight. The $HfOCl_2.8H_2O$ crystals therefrom were filtered and washed with 500 ml of 7N HCl. The crystals were fluorinated, as in Example 1, with 428 ml 48% HF being added over 33 minutes, and a temperature of 48 degrees C was reached. After cooling, the $HfF_4.H_2O$ crystals were recovered by filtration and washing with 250 ml 7N HCl, and weighed 562 g, which yielded a 110 degrees C-dried mass of 437 g. The analysis of the dried monohydrate gave, in weight ppb, impurities: Fe, <50; Ni, <20; Cu, <10; Co, <10; Ce, <10; and Nd, <10.

Example 3. This example illustrates the effectiveness of the present process by showing the low levels of iron reached in recrystallization, and an iron balance around the fluorination, all done in large scale. 30.0 Kg of $ZrOCl_2.8H_2O$ crystals (of undetermined Fe level), previously recrystallized, were recrystallized again by dissolving in 30 liters of distilled water (Fe <2 ppb) and heating to 81 degrees C, at which time 13.6 liters of conc. HCl (labelled at 0.000001% Fe) were added and the solution cooled overnight. The recrystals were filtered and washed two times with 15 liters of 7N HCl. 24.59 Kg of recrystals were recovered and their oxide content determined to be 36.3% by ignition. Their Fe level was undetectable at <2 ppb. They were placed in a polypropylene tank and 11.73 kg of 49.4% HF (labelled at 40 ppb Fe, locally analyzed at 17 ppb) was added over 34 minutes, the temperature rising to 74 degrees C. After standing overnight, the $ZrF_4.H_2O$ crystals were recovered by filtration, without washing. This wet cake had a mass of 14.25 kg, and an Fe level of <5ppb. The filtrate was not collected in its entirety, but a sample was taken for analysis, which gave 14 ppb Fe. By mass difference with the starting materials and the wet cake, its mass should have been 22.07 kg. This information makes possible the following mass balance calculation for iron:

| IN | | | | OUT | | | |
|---|---|---|---|---|---|---|---|
| Material | wt. Kg | ppb iron | g iron | Material | wt. kg | ppb iron | g iron |
| $ZrOCl_2.8H_2O$ | 24.59 | <2 | <49 | filtrate | 22.07 | 14 | 309 |
| 48% HF | 11.73 | 17 | 199 | monohydrate wet cake | 14.25 | <5 | <71 |
| | | | <248 | | | | <380 |
| OUT/IN = (380/248)x100 = 153% recovery | | | | | | | |

## Claims

1. A process for producing an ultra pure fluoride product salt of a metal selected from Zr, Hf, Ba, La, Al and Na comprising recrystallizing from aqueous media a soluble precursor salt material containing one or more of Fe, Ni, Cu, Co, Ce, Nd or Sm impurities, said precursor salt material being selected from the chlorides, bromides, iodides, oxychlorides, oxybromides, oxyiodides, nitrates and oxynitrates of said metals, the recrystallization comprising the steps of essentially completely solubilizing said precursor salt material and any of said impurities present through adjustment of temperature and/or acidity of said aqueous media, and thereafter completely insolubilizing essentially only the precursor salt through readjustment of said temperature and/or acidity to leave said impurities in said media, and separating the purified precursor salt from said media, fluorinating the purified precursor salt with a fluorinating agent at a temperature of from about 0 to about 100 degrees C, to yield a substantially insoluble purified fluoride product salt in contact with a liquor containing the combined impurity content of the purified precursor salt and the fluorinating agent, and isolating the purified fluoride product salt from the liquor.

2. The process of Claim 1 wherein the metals are selected from Zr, Hf, and Al, the soluble precursor salt material is a chloride, oxychloride, nitrate or oxynitrate, and the fluorinating agent is aqueous hydrofluoric acid or vapors derived therefrom.

3. The process of Claim 1 wherein the metals are Zr and Hf, the purified precursor salt is the oxychloride, and the fluorinating agent is aqueous hydrofluoric acid or vapors derived therefrom.

4. The process of Claim 1 where in the recrystallization comprises dissolving at above about 75 degrees C, a halide precursor salt material in aqueous hydrochloric acid media of a normality of from about 2 to about 12, cooling said media to below about 40 degrees C to form an oxyhalide precursor salt precipitate, filtering said precipitate from said media, and repeating with said oxyhalide precursor salt said steps of dissolving, filtration and precipitation at least one time prior to fluorination thereof.

5. The process of Claim 4 wherein the halide precursor salt material is $ZrCl_4$ or $HfCl_4$ and the oxyhalide precursor salt formed in the recrystallization is $ZrOCl_2$ or $HfOCl_2$, in hydrated form.

6. The process of Claim 5 wherein each precipitate is washed at a temperature of below about 30 degrees C with hydrochloric acid at least once prior to further treatment.

7. The process of Claim 1 wherein the fluorination is carried out by contacting the recrystallized precursor salt crystals with HF vapors from aqueous hydrofluoric acid, or with HF gas.

8. The process of Claim 7 wherein the recrystallized precursor salt crystals are $ZrOCl_2$, in hydrated form, and wherein an aqueous by-product liquor is formed into which any impurities remaining in the precursor salt or imported with the HF are rejected to effect thereby further purification of the desired fluorination product salt.

9. The process of Claim 1 wherein prior to fluorinating the purified precursor salt to obtain the fluoride product salt, the precursor salt is contacted with from about 5 to about 15% of the stoichiometrically determined amount of $F^-$ to precipitate out and sacrifice a small portion of product salt along with substantially all remaining transition and rare earth element impurities.

10. The process of any one of Claims 1-9 wherein the level of Fe in the initial precursor salt material is above about 100 ppb, and in said product salt at below about 30 ppb.

European
Patent Office

**EUROPEAN SEARCH REPORT**

Application Number

**EP 90 31 2689**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | MATERIALS SCIENCE FORUM, vols. 32-33, 1988, pages 629-634, (Halide Glasses V); J.A. SOMMERS et al.: "Research and development for commercial production of high-puritiy ZrF4 and HfF4" * Pages 630,632 * | 1-7,10 | C 01 B 9/08 C 01 G 25/04 C 01 G 27/04 C 01 F 7/50 |
| | – – – | | |
| A | CHEMICAL ABSTRACTS, vol. 111, no. 14, 2nd October 1989, page 150, abstract no. 117766f, Columbus, Ohio, US; & PL-A-145 448 (ZAKLAD ODCZYNNIKOW CHEMICZ-NYCH; POLITECHNIKA GDANSKA) 30-09-1988 | | |
| | – – – | | |
| A | US-A-4 256 463  (D.P. CARTER) | | |
| | – – – – – | | |

| | |
|---|---|
| | TECHNICAL FIELDS SEARCHED (Int. Cl.5) |
| | C 01 G C 03 C C 01 B |

The present search report has been drawn up for all claims

| Place of search | Date of completion of search | Examiner |
|---|---|---|
| The Hague | 28 February 91 | LIBBERECHT-VERBEECK |